# EUROPÄISCHE PATENTANMELDUNG

(11) **EP 2 533 117 A1**
(43) Veröffentlichungstag der Anmeldung: **12.12.2012**
(21) Anmeldenummer: 11169359.4
(22) Anmeldetag: 09.06.2011
(51) Int. Cl.: G05B 19/418, G05B 23/02, G06Q 50/00

(54) **Unterstützung der Fehlerdiagnose einer Industrieanlage**

(71) Anmelder: SIEMENS AKTIENGESELLSCHAFT, 80333 München (DE)
(72) Erfinder: Dallmann, Michael, 90530 Wendelstein (DE); Remmel, Markus, 76199 Karlsruhe (DE)

(57) **Zusammenfassung**

Zur Unterstützung der Fehlerdiagnose einer Industrieanlage werden eine Anzahl von Bedienobjekten (6,6',6") zur Auswahl angezeigt, wobei das oder jedes Bedienobjekt (6,6',6") ein signaltechnisch mit einer Anlagenkomponente der Industrieanlage verbundenes Datenobjekt ist, das ein Set von Istgrößen, Sollgrößen und/oder Stellgrößen der zugeordneten Anlagenkomponente beinhaltet. Bei Auswahl des Bedienobjekts (6,6',6") bzw. eines der Bedienobjekte (6,6',6") wird ein derselben Anlagenkomponente zugeordnetes Planungsobjekt (25,25',25") ermittelt, wobei das oder jedes Planungsobjekt (25,25',25") ein Datenobjekt ist, das die Art der Anlagenkomponente charakterisiert sowie die Anschlussstellen, über die die Anlagenkomponente mit anderen Anlagenkomponenten wechselwirkt. Alternativ werden eine Anzahl von Planungsobjekten (25,25',25") zur Auswahl angezeigt und bei Auswahl eines Planungsobjekts (25,25',25") ein zugeordnetes Bedienobjekt (6,6',6") ermittelt. In beiden Fällen werden das Bedienobjekt (6,6',6") zusammen mit dem zugeordneten Planungsobjekt (25,25',25") auf einem Anzeigegerät (21) dargestellt.

## Beschreibung

Die Erfindung bezieht sich auf ein Verfahren zur Unterstützung der Fehlerdiagnose einer Industrieanlage. Die Erfindung bezieht sich weiterhin auf eine zugehörige Vorrichtung.

Der Begriff Industrieanlage bezieht sich hier und im Folgenden insbesondere auf eine prozesstechnische oder verfahrenstechnische Anlage aus dem Bereich der chemischen Industrie, Getränke- und Lebensmitteltechnik, Umwelttechnik, Pharmaindustrie oder Kraftwerkstechnik. Prinzipiell ist es jedoch auch denkbar, das beschriebene Verfahren auf Industrieanlagen aus dem Bereich der Fertigung (Linienfertigung) anzuwenden.

Eine derartige Industrieanlage umfasst in der Regel eine Vielzahl von einzelnen, miteinander verschalteten, Anlagenkomponenten. Typische Anlagenkomponenten einer verfahrens- bzw. prozesstechnischen Anlage sind dabei Behälter, Reaktoren, Rohrleitungen, Armaturen usw. Diese werden im Zuge eines Herstellungsprozesses von Ausgangsstoffen unter Veränderung/Verarbeitung der Ausgangsstoffe zu einem daraus resultierenden Produkt durchlaufen.

Um diesen Herstellungsprozess durch das Anlagenpersonal überwachen und/oder steuern zu können, umfasst eine solche Industrieanlage üblicherweise eine Leitwarte, in welcher an einem oder mehreren Bildschirmen in einer im Folgenden als Bedienbild bezeichneten Darstellung die Anlage repräsentiert wird.

Das Bedienbild zeigt dabei oft ein schematisches Fließbild der Anlage. Dabei umfasst das Bedienbild mehrere "Bedienobjekte", wobei jedes Bedienobjekt jeweils einer Anlagenkomponente zugeordnet ist. Ein Bedienobjekt dient dabei dazu, aktuelle Betriebsdaten (insbesondere Ist-, Soll- und Stellwerte von Prozess- oder Betriebsparametern) dieser Anlagenkomponente darzustellen. Zudem dient das Bedienobjekt meist auch dazu, Eingaben des Anlagenpersonals aufzunehmen und nach Maßgabe dieser Eingabe Betriebsparameter der Anlagenkomponente zu verstellen. Schließlich haben Bedienobjekte häufig die weitere Funktion, einen Alarm (grafisch) auszugeben, wenn ein Istwert eines Betriebsparameters von einem vorgegebenen Sollwert um mehr als eine bestimmte Alarmschwelle abweicht. Konkret handelt es bei dem oder jedem Bedienobjekt um ein Datenobjekt, welches signaltechnisch mit der zugeordneten Anlagenkomponente (bzw. mit einem der Anlagenkomponente zugeordneten Mess-, Steuer- oder Regelgerät) verbunden ist und ein Set von Istgrößen, Sollgrößen und/oder Stellgrößen der zugeordneten Anlagenkomponente umfasst.

Da zum einen nicht alle Anlagenkomponenten bedien- oder beobachtbar sind, und da zum anderen das Bedienbild möglichst übersichtlich sein soll, zeigt das Bedienbild in der Regel eine (mitunter stark) vereinfachte Darstellung der Anlage, in der eine Vielzahl von Anlagenkomponenten nicht repräsentiert sind. Eine Veränderung des Bedienbildes durch das Anlagenpersonal ist (insbesondere auch aus sicherheitstechnischen Aspekten heraus) normalerweise nicht vorgesehen.

Die vereinfachte Darstellung des Bedienbildes zeigt sich jedoch mitunter als problematisch, wenn es darum geht, für einen aus dem Bedienbild erkennbaren Fehler eine Fehlerursache zu finden, da zur Fehlerdiagnose wichtige Hintergrundinformationen über die Anlage aus dem Bedienbild regelmäßig nicht entnehmbar sind.

Zur Fehlerdiagnose wird daher üblicherweise auf die Planungsunterlagen der Anlage zurückgegriffen, beispielsweise auf ein vollständiges Fließbild und/oder auf Schaltpläne. Die benötigte Hintergrundinformation ist in den Planungsunterlagen zwar regelmäßig enthalten, aber häufig nur schwer entnehmbar, da die Planungsunterlagen einer typischen Industrieanlage oft sehr vielschichtig und komplex sind. Zudem liegen die Planungsunterlagen oft in einer nur schwer überschaubaren Weise vor. Insbesondere sind die verschiedenen Gewerken zugeordneten Informationen in den Planungsunterlagen üblicherweise getrennt voneinander aufgeführt. Z.B. finden sich die den Stofffluss betreffenden Informationen in einem Rohrleitungsplan, die die elektrische Versorgung betreffenden Information getrennt hiervon in einem Elektroplan, etc.

In jedem Fall ist den Planungsunterlagen keine Information zu den aktuellen Betriebsparametern entnehmbar, die symptomatisch für den zu analysierenden Fehlerfall sind. Diese Betriebsparameter müssen - soweit sie nicht aus dem vereinfachten Bedienbild ablesbar sind - unter Umständen vor Ort an der Anlage selbst beschafft werden, was bei großen und komplexen Anlagen zu einer erheblichen Verzögerung und Erschwerung der Fehlerdiagnose führen kann.

Der Erfindung liegt daher die Aufgabe zugrunde, die Fehlerdiagnose im Betrieb einer Industrieanlage zu vereinfachen.

Bezüglich eines Verfahrens zur Unterstützung der Fehlerdiagnose wird oben genannte Aufgabe unabhängig gelöst durch zwei Erfindungsvarianten mit den Merkmalen des Anspruchs 1 bzw. des Anspruchs 2. Danach ist in einer ersten Variante der Erfindung gemäß Anspruch 1 zur Unterstützung der Fehlerdiagnose einer Industrieanlage vorgesehen, einem Nutzer eine Anzahl von Bedienobjekten zur Auswahl anzuzeigen. Das oder jedes Bedienobjekt ist hierbei ein Datenobjekt, das signaltechnisch mit einer Anlagenkomponente der realen Industrieanlage verbunden ist, und das ein Set von Istgrößen, Sollgrößen und/oder Stellgrößen dieser Anlagenkomponente beinhaltet. Das Bedienobjekt bezieht sich somit im Wesentlichen auf "dynamische" Eigenschaften oder Betriebsparameter der Anlagekomponente, wie z.B. Temperatur, Druck, Durchflussgeschwindigkeit, Ventilstellung, etc., welche im Normalbetrieb der Anlage veränderlich sind. Bei Auswahl des Bedienobjekts bzw. eines der Bedienobjekte durch den Nutzer wird verfahrensgemäß ein sogenanntes Planungsobjekt ermittelt, das derselben Anlagenkomponente zugeordnet ist. Bei dem oder jedem Planungsobjekt handelt es sich um ein Datenobjekt, das die Art der Anlagenkomponente charakterisiert, sowie die Anschlussstellen, über die die Anlagenkomponente mit anderen Anlagenkomponenten verbunden ist. Das Planungsobjekt bezieht sich somit im Wesentlichen auf "statische" oder "strukturelle" Eigenschaften der Anlagekomponente, die bei der Planung der Anlage festgelegt werden und im Normalbetrieb der Anlage nicht mehr veränderlich sind. Insbesondere handelt es bei dem oder jedem Planungsobjekt vorzugsweise um ein sogenanntes CAE-Objekt, wie es in der computergestützten Anlagenplanung ("Computer Aided Engineering") verwendet wird. Das ausgewählte Bedienobjekt wird verfahrensgemäß zusammen mit dem zugeordneten Planungsobjekt auf einem Anzeigegerät dargestellt.

In der zweiten Variante der Erfindung gemäß Anspruch 2 wird das vorstehend beschriebene Verfahrensprinzip umgekehrt, indem hier zunächst eine Anzahl von Planungsobjekten zur Auswahl angezeigt, und nach Auswahl des Planungsobjekts oder eines der Planungsobjekte ein zugeordnetes Bedienobjekt ermittelt wird. Anschließend wird wiederum das Planungsobjekt zusammen mit dem Bedienobjekt auf dem Anzeigengerät dargestellt.

Beiden Erfindungsvarianten liegt die gemeinsame Idee zugrunde, Bedieninformation und Planungsinformation datentechnisch und komponentenweise miteinander zu verknüpfen, so dass die zu einer beliebigen Anlagenkomponente verfügbare Planungs- und Bedieninformation einfach (insbesondere automatisiert) gesammelt und gebündelt angezeigt werden kann. Indem das Bedienobjekt und das zugeordnete Planungsobjekt gemeinsam angezeigt werden, können direkte Zusammenhänge zwischen der Konstruktion der Anlage, welche in übersichtlicher Form aus dem Planungsobjekt erkennbar ist, und aktuellen, sich aus dem (fehlerhaften) Betrieb der Anlage ergebenden Prozessdaten, welche aus dem Bedienobjekt ersichtlich sind, einfach erkannt werden.

Vorteilhafterweise können insbesondere Hintergrundinformationen zu der Anlage, die aus dem Bedienbild selbst nicht ersichtlich sind, während des Betriebs der Anlage auf vergleichsweise einfache Art abgerufen werden, und mit der aktuellen Betriebssituation in Verbindung gebracht werden, wodurch die Auffindung von Fehlerursachen wesentlich vereinfacht ist.

Die Auswahl der Bedien- bzw. Planungsobjekte kann auf verschiedene Weise realisiert werden. In einer zweckmäßigen Ausführungsform des Verfahrens kann beispielsweise vorgesehen sein, dass die Bedienobjekte direkt im Bedienbild ausgewählt werden können, insbesondere indem ein Nutzer mit der Maus oder sonstigem Auswahlgerät das auszuwählende Bedienobjekt markiert ("anklickt"), wobei in diesem Fall beispielsweise in oder neben dem Bedienbild ein Fenster mit einer Ansicht des zugeordneten Planungsobjekts geöffnet wird. In Umkehrung dieses Prinzips kann alternativ auch vorgesehen sein, dass durch den Nutzer ein Planungsobjekt in einem Rohrleitungsplan oder einem anderen Plan der Anlage ausgewählt werden kann, wobei in diesem Fall die Information des zugehörigen Bedienobjekts eingeblendet wird.

In einer bevorzugten Ausgestaltungsvariante ist vorgesehen, dass ein Bedien- oder Planungsobjekt aus einer Liste ausgewählt werden kann, in der diese Objekte, beispielsweise mit dem Namen der zugehörigen Anlagenkomponente aufgeführt sind. Das ausgewählte Bedien- bzw. Planungsobjekt und das jeweils zugehörige Planungs- bzw. Bedienobjekt werden hierbei vorzugsweise in einem von dem Bedienbild und den sonstigen Plänen der Anlage unabhängigen Anzeigebereich dargestellt. Letztere Ausführungsvariante ist insofern vorteilhaft, als hierbei nicht in das bestehende Bedienbild und die bestehenden Pläne eingegriffen wird. Vielmehr ermöglicht diese Ausführungsvariante der Erfindung einem Nutzer, im Fehlerfall der Anlage unkompliziert ein fehlerspezifisches Diagnosebild zu generieren, das die gesamte für die Fehlerdiagnose erforderliche Bedien- und Planungsinformation unter Ausblendung der jeweils nicht benötigten Information enthält.

In einer bevorzugten Ausführungsform des Verfahrens werden ein angezeigtes Bedienobjekt und das zugeordnete Planungsobjekt (oder ein angezeigtes Planungsobjekt und das zugeordnete Bedienobjekt) grafisch miteinander verknüpft dargestellt. Hierdurch wird der Zusammenhang zwischen den zueinander gehörigen Bedien- und Planungsobjekten besonders einfach und übersichtlich erkennbar. Die grafische Verknüpfung erfolgt dabei durch eine räumlich eng benachbarte Darstellung der Bedien- und Planungsinformation oder durch ein grafisches Symbol wie z.B. eine Verbindungslinie, einen Rahmen, etc. Eine grafische Verknüpfung kann jedoch auch durch eine gleichartige Farbcodierung der beiden zueinander gehörigen Bedien- und Planungsobjekte erfolgen. Zusätzlich oder alternativ ist es auch denkbar, dass bei Markierung (beispielsweise "Anklicken" oder Überstreifen mit einem Auswahlgerät) des Bedienobjektes das zugeordnete Planungsobjekt optisch hervorgehoben wird ("aufblinkt") oder umgekehrt.

Bei der oder jeder Anlagenkomponente kann es sich um ein einzelnes, nicht weiter unterteilbares Gerät oder Bauteil handeln, z.B. um einen einzelnen Sensor oder ein einzelnes Ventil. Eine Anlagenkomponente kann aber auch durch eine komplexe Baueinheit mit mehreren Unterkomponenten gebildet sein, beispielsweise durch einen Vorratstank mit Sensoren für Druck, Temperatur, Füllstand und/oder Durchflussvolumen. In beiden Fällen kann eine Anlagenkomponente bei der Anlagenplanung in den Zuständigkeitsbereich unterschiedlicher "Gewerke" (Planungseinheiten) fallen, wie z.B. Rohrleitungsplanung, Elektroplanung und/oder Hydraulik- bzw. Pneumatikplanung und logische (d.h. signalverarbeitungs- und steuertechnische) Planung.

Entsprechend ist in einer bevorzugten Ausführungsform des Verfahrens vorgesehen, dass das Planungsobjekt in einer den Darstellungskonventionen des betreffenden Gewerks entsprechenden Ansicht auf dem Anzeigegerät dargestellt wird. Insbesondere wird das Planungsobjekt
- in einer "Rohrleitungsansicht" in Form eines RI(Rohrleitungs/Instrumenten)-Symbols eines RI-Fließbildes,
- in einer "elektrischen Ansicht" in Form eines elektrischen Schaltzeichens,
- in einer "fluidtechnischen Ansicht" (d.h. pneumatischen und/oder hydraulischen Ansicht) in Form eines fluidtechnischen Schaltzeichens oder
- in einer "logischen Ansicht" in Form eines logischen Schaltzeichens, das die Signaleingänge und -ausgänge der Anlagenkomponente kennzeichnet,
auf dem Anzeigegerät angezeigt.

Häufig fällt ein und dieselbe Anlagenkomponente in den Bereich mehrerer Gewerke. So unterliegt die Dimensionierung der Rohranschlüsse eines Magnetventils beispielsweise der Rohrleitungsplanung, während die Verdrahtung der elektrischen Versorgungsanschlüsse der Elektroplanung, und die Ansteuerung des Magnetventils sowie die signaltechnische Beschaltung des Magnetventils der logischen Planung zugehören.

In einer besonders zweckmäßigen Ausführungsform des Verfahrens sind für das einer solchen Anlagenkomponente zugeordnete Planungsobjekt mehrere der vorstehend beschriebenen Ansichten verfügbar, wobei diese Ansichten verfahrensgemäß dem Nutzer zu Auswahl bereitgestellt werden. Das Planungsobjekt wird dem Nutzer dabei jeweils in der ausgewählten Ansicht auf dem Anzeigegerät angezeigt. Im Falle des vorstehend beschriebenen Magnetventils kann der Nutzer beispielsweise reversibel zwischen der Rohrleitungsansicht, der elektrischen Ansicht und der logischen Ansicht wählen.

In einer Weiterentwicklung des Verfahrens wird die einer Anlagenkomponente zugeordnete Bedien- und Planungsinformation im Kontext der entsprechenden Information benachbarter Anlagenkomponenten dargestellt. Für die "Kontextdarstellung" wird dem Nutzer zunächst - entweder unmittelbar oder mittelbar über das zugeordnete Bedienobjekt - ein Planungsobjekt zur Auswahl bereitgestellt. Zu dem durch den Nutzer ausgewählten Planungsobjekt werden dann verfahrensgemäß alle Planungsobjekte ermittelt, welche jeweils über eine Verbindungsleitung unmittelbar mit einer (rohrleitungstechnischen, elektrischen, fluidtechnischen oder logischen) Anschlussstelle des ausgewählten Planungsobjekts verbunden sind. Diese "Nachbarobjekte" werden hierbei vorzugsweise anhand hinterlegter Verbindungsinformation ermittelt, die wahlweise als Teil der Planungsobjekte selbst oder in einer übergeordneten Verbindungstabelle hinterlegt sein kann. Anschließend werden die solchermaßen ermittelten, Nachbarobjekte zusammen mit dem ausgewählten Planungsobjekt auf dem Anzeigegerät dargestellt. Eine weitere Fortentwicklung des Verfahrens ermöglicht, die Abhängigkeit zweier beliebig ausgewählter Anlagenkomponenten besser zu verstehen, indem in dieser sogenannten "Verbindungsdarstellung" die (rohrleitungstechnische, elektrische, fluidtechnische oder logische) Verbindung dieser Anlagenkomponenten ermittelt und dargestellt wird. Hierzu werden dem Nutzer zunächst zwei Planungsobjekte zur Auswahl bereitgestellt, wobei die Auswahl wiederum entweder unmittelbar oder mittelbar über die Auswahl der zugeordneten Bedienobjekte erfolgen kann. Dem Nutzer wird also ermöglicht, zwei (verschiedene) Planungsobjekte auszuwählen. Nach getroffener Auswahl werden verfahrensgemäß alle Planungsobjekte ermittelt, welche über eine ihrer Anschlussstellen mittelbar oder unmittelbar mit einem ausgewählten Planungsobjekt und mit einer anderen Anschlussstelle mittelbar oder unmittelbar mit dem anderen ausgewählten Planungsobjekt verbunden sind. Das Verfahren bedient sich hierbei wiederum der vorstehend beschriebenen Verbindungsinformation. Die solchermaßen ermittelten "Zwischenobjekte" werden schließlich zusammen mit den ausgewählten Planungsobjekten auf dem Anzeigegerät dargestellt. In der Verbindungsdarstellung werden somit alle Planungsobjekte angezeigt, welche entlang einer rohrleitungstechnischen, elektrischen, fluidtechnischen und/oder logischen Verbindung zwischen den beiden ausgewählten Planungsobjekten liegen.

Eine weitere Fortentwicklung der Erfindung ermöglicht, die an einer gemeinsamen Versorgungsleitung hängenden Anlagenkomponenten zu ermitteln und darzustellen. Hierzu wird dem Nutzer - wiederum entweder unmittelbar oder mittelbar über das zugeordnete Bedienobjekt - ein Planungsobjekt zur Auswahl bereitgestellt. Nach getroffener Auswahl wird eine (rohrleitungstechnische, elektrische, fluidtechnische oder logische) Versorgungsleitung ermittelt, an die das ausgewählte Planungsobjekt angeschlossen ist. Als Versorgungsleitung wird dabei allgemein eine Verbindungsleitung bezeichnet, an die - zumindest potentiell - mehr als zwei Anlagenkomponenten angeschlossen werden können. Bei der Versorgungsleitung kann es sich insbesondere um eine Kühlwasserleitung, eine Stromleitung, eine Druckluft- oder Öldruckleitung oder eine Datenleitung eines Bussystems handeln. Vorzugsweise werden für die Versorgungsdarstellung weiterhin alle weiteren Planungsobjekte ("Nachbarobjekte") ermittelt, die ebenfalls an diese Versorgungsleitung angeschlossen sind. Die solchermaßen ermittelten Nachbarobjekte werden zusammen mit dem ausgewählten Planungsobjekt auf dem Anzeigegerät dargestellt.

Vorzugsweise werden in der Kontext-, Verbindungs- bzw. Versorgungsdarstellung zudem die Verbindungsleitungen dargestellt, die die dargestellten Planungsobjekte verbinden. Zweckmäßigerweise wird des Weiteren zu jedem Nachbar- bzw. Zwischenobjekt das gegebenenfalls vorhandene Bedienobjekt angezeigt.

In der Kontext-, Verbindungs- bzw. Versorgungsdarstellung kann vorzugsweise wiederum zwischen mehreren der vorstehend beschriebenen Ansichten (d.h. der Rohrleitungsansicht, der elektrischen Ansicht, der hydraulischen bzw. pneumatischen oder der logischen Ansicht) ausgewählt werden. Dabei können sich die dargestellten Nachbar- bzw. Zwischenobjekte je nach gewählter Ansicht unterscheiden.

Vorteilhafterweise werden durch die Kontext-, Verbindungs- bzw. Versorgungsdarstellung auch Anlagenkomponenten (bzw. deren Planungsobjekte) angezeigt, welche aus dem Bedienbild nicht entnehmbar sind. Hierdurch kann die tatsächliche Umgebung einer - fehlerbehafteten - Anlagenkomponente zur Fehlersuche herangezogen werden und eine Fehlerursache leichter ermittelt werden.

Bezüglich einer Vorrichtung wird oben genannte Aufgabe erfindungsgemäß gelöst durch die Merkmale des Anspruchs 10. Danach umfasst die Vorrichtung eine Diagnoseeinheit, die schaltungs- und/oder programmtechnisch dazu eingerichtet ist, das vorstehend beschriebene Verfahren in einer seiner Ausführungsvarianten automatisch durchzuführen. Weiterhin umfasst die Vorrichtung ein Anzeigegerät zur Darstellung der Bedien- und Planungsobjekte.

Bei der Diagnoseeinheit handelt es sich insbesondere um einen Rechner, in dem ein das vorstehend beschriebene Verfahren implementierendes Diagnoseprogramm lauffähig installiert ist.

Nachfolgend wird ein Ausführungsbeispiel der Erfindung anhand einer Zeichnung näher erläutert. Darin zeigen:
- FIG 1: in einem schematischen Blockschaltbild einen Leitstand einer Industrieanlage sowie eine Vorrichtung zur Unterstützung der Fehlerdiagnose, wobei diese Diagnosevorrichtung eine Diagnoseeinheit und ein Anzeigegerät in Form eines Bildschirms umfasst,
- FIG 2: in schematischer Darstellung ein von der Diagnoseeinheit herangezogenes Planungsobjekt, das einer Anlagenkomponente der Industrieanlagehier einem pneumatisch ansteuerbaren Ventil - zugeordnet ist, sowie
- FIG 3 und 4: beispielhafte Bildschirmdarstellungen, welche mittels der Diagnoseeinheit auf dem Bildschirm angezeigt werden.

Einander entsprechende Teile und Größen sind in allen Figuren stets mit den gleichen Bezugszeichen versehen.

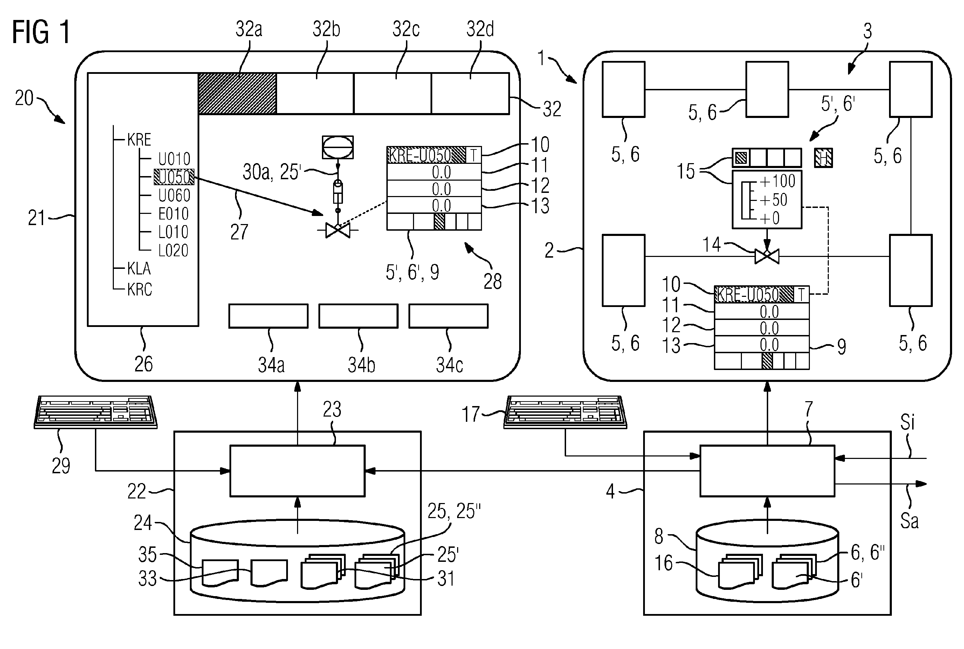

FIG 1 zeigt grob schematisch vereinfacht einen Leitstand 1 einer prozesstechnischen (Industrie-)Anlage. Der Leitstand 1 umfasst ein Anzeigegerät in Form eines Bildschirms 2, auf welchem ein Bedienbild 3 zur Überwachung und Steuerung der Anlage angezeigt ist. Der Leitstand 1 umfasst des Weiteren eine Steuereinheit 4, die zur Erzeugung des Bedienbilds 3 auf dem Bildschirm 2 dient.

Das Bedienbild 3 umfasst grafische Darstellungen 5,5' einer Vielzahl von Bedienobjekten 6,6', wobei jedes Bedienobjekt 6,6' einer der Anlagenkomponenten der überwachten Anlage zugeordnet ist. Beispielhaft ist in FIG 1 die Darstellung 5' eines (beliebig herausgegriffenen) Bedienobjekts 6' im Detail gezeigt. Dieses Bedienobjekt 6' ist einem in einer Rohrleitung der Anlage angeordneten, pneumatisch ansteuerbaren Ventil mit integriertem Drucksensor zugeordnet. Die Darstellungen 5 der übrigen Bedienobjekte 6 des Bedienbilds 3 sind in FIG 1 der Übersichtlichkeit halber lediglich angedeutet.

Bei der Steuereinheit 4 handelt es sich um einen Rechner, in dem ein - nachfolgend als (Bedienbild-)Generator 7 bezeichnetes - Steuerprogramm lauffähig installiert ist.

Bei dem beispielhaft herausgegriffenen Bedienobjekt 6' und den weiteren Bedienobjekten 6 handelt es sich jeweils um ein Datenobjekt, das in einer Datenbank 8 der Steuereinheit 4 angelegt ist, und das die Istgrößen, Sollgrößen und Stellgrößen umfasst, die die jeweils zugehörige Anlagenkomponente charakterisieren. Das Bedienobjekt 6' umfasst beispielsweise
- eine Istgröße, die den von dem Drucksensor detektierten Ist-Druck wiedergibt,
- eine Sollgröße, die den mittels des Ventils in der Rohrleitung einzustellenden Soll-Druck wiedergibt, sowie
- eine Stellgröße, die die - zwischen einer offenen Stellung und einer geschlossenen Stellung einstellbare - Ventilstellung wiedergibt.

Jedes Bedienobjekt 6,6' umfasst zusätzlich eine Identifikationsangabe, die einen das Bedienobjekt 6,6' und die zugehörige Anlagenkomponente eindeutig identifizierenden Namen enthält. So ist dem Bedienobjekt 6' und dem zugehörigen Ventil beispielhaft der Name "KRE-U050" zugewiesen. Außerdem umfasst jedes Bedienobjekt 6,6' eine Angabe, die die zugehörige Anlagenkomponente der Art und ggf. dem Typ nach spezifiziert. Im Rahmen des Bedienobjekts 6' spezifiziert diese Angabe somit, dass es sich bei der zugeordneten Anlagenkomponente um ein pneumatisch betätigbares Ventil handelt. Optional enthält das Bedienobjekt 6' darüber hinausgehend Angaben zu der konkreten Bauform des Ventils, insbesondere zu dem Hersteller und dem Produktnamen, etc.

Zusätzlich zu den in dem Bedienbild 3 dargestellten Bedienobjekten 6,6' ist in der Datenbank 8 ein weiteres Bedienobjekt 6" für jede bedien- und/oder beobachtbare Anlagenkomponente angelegt, die aus Gründen der Übersichtlichkeit nicht in dem Bedienbild 3 dargestellt ist. Als "bedien- und/oder beobachtbar" wird eine Anlagenkomponente bezeichnet, deren Zustand nach Maßgabe mindestens einer Stellgröße automatisch veränderbar ist und/oder zu der mindestens ein Betriebsparameter als Istgröße signaltechnisch erfassbar ist.

Wie aus FIG 1 erkennbar ist, wird die grafische Darstellung 5' des Bedienobjekts 6' im Bedienbild 3 im Wesentlichen durch eine Tabelle 9 gebildet. Die Tabelle 9 umfasst ein Namensfeld 10, in welchem der Name des Bedienobjekts 6' bzw. der zugeordneten Anlagenkomponente angezeigt wird. Weiterhin umfasst die Tabelle 9 ein Istwertfeld 11 zur Anzeige des Werts der Istgröße, ein Sollwertfeld 12 zur Anzeige des Werts der Sollgröße sowie ein Stellwertfeld 13 zur Anzeige des Werts der Stellgröße.

Für die Anzeige im Bedienbild 3 umfasst die grafische Darstellung 5,5' jedes Bedienobjekts 6,6' gemäß FIG 1 zusätzlich ein RI-Schaltzeichen, das die Art der jeweils zugeordneten Anlagenkomponente charakterisiert. Im Falle des Bedienobjekts 6' enthält die zugehörige grafische Darstellung 5' das für ein Ventil gebräuchliche RI-Schaltzeichen 14. Optional enthält die grafische Darstellung 5,5' jedes Bedienobjekts 6,6' weitere Anzeigeelemente 15, die die in dem Bedienobjekt 6,6' enthaltenen Größen grafisch darstellen. Bei diesen Anzeigeelementen 15 handelt es sich z.B. um ein die Stellgröße visualisierendes Balkendiagramm, Farbkodierungen oder Leuchtanzeigen, die den ordnungsgemäßen Betrieb der Anlagenkomponente und/oder einen Fehlerfall (Alarm) anzeigen, etc.

Der Bedienbildgenerator 7 erzeugt das Bedienbild 3, indem er auf die in der Datenbank 8 angelegten Bedienobjekte 6,6' zugreift. Um diese abstrakten Datenobjekte in die entsprechende grafische Darstellung 5,5' umzusetzen, greift der Generator 7 zusätzlich auf ebenfalls in der Datenbank 8 hinterlegte Vorlagen 16 ("Templates") zu, die das grafische Anzeigeformat (also das "Aussehen") für die jeweilige Darstellung 5,5' in Abhängigkeit der Art der zugeordneten Anlagenkomponente vorgeben. Für die Darstellung 5' greift der Generator 7 aufgrund der in dem Bedienobjekt 6' enthaltenen Angaben somit auf eine Vorlage 16 zu, die das Aussehen der Ventildarstellung vorgibt.

Über den Generator 7 ist jedes im Bedienbild 3 dargestellte Bedienobjekt 6,6' signaltechnisch mit der zugeordneten Anlagenkomponente verschaltet, indem der Generator 7 den Wert der oder jeder Istgröße des Bedienobjekts 6,6' fortlaufend anhand von entsprechenden Eingangssignalen Si aktualisiert, die der Steuereinheit 4 von der jeweiligen Anlagenkomponente zugeführt werden. Insbesondere wird der Ist-Druck des Bedienobjekts 6' regelmäßig anhand von Messwerten des Drucksensors aktualisiert. Umgekehrt wird die Anlagenkomponente von dem Generator 7 durch Zuführung von Ausgabesignalen Sa angesteuert, die den Betriebszustand der Anlagenkomponente nach Maßgabe der oder jeder Stellgröße des Bedienobjekts 6,6' einstellt. Insbesondere wird die Ventilstellung des Ventils durch den Generator 7 in der durch die Stellgröße des Bedienobjekts 6' vorgegebenen Weise eingestellt.

Der Generator 7 passt die Darstellung 5,5' des jeweiligen Bedienobjekts 6,6' fortlaufend an die aktualisierten Werte der oder jeder Istgröße an, so dass in dem Bedienbild 3 stets aktualisierte Istwerte angezeigt werden. Zudem ändert der Generator 7 auf entsprechende Eingaben, die ein Nutzer des Leitstands 1 über Eingabemittel wie z.B. eine Tastatur 17, eine Maus, einen Touchscreen oder dergleichen vornimmt, den jeweiligen Wert der oder jeder Soll- oder Stellgröße und passt auch in diesem Fall die zugehörige Darstellung 5,5' an.

FIG 1 zeigt weiterhin eine (Diagnose-)Vorrichtung 20, die einen Nutzer, insbesondere den Nutzer des Leitstandes 1, bei der Diagnose von Fehlern im Betrieb der Anlage unterstützt.

Die Vorrichtung 20 umfasst ein zweites Anzeigegerät in Form eines weiteren Bildschirms 21 sowie eine Diagnoseeinheit 22. Bei der Diagnoseeinheit 22 handelt es sich um einen Rechner, in dem ein Diagnoseprogramm 23 lauffähig installiert ist.

Die Diagnoseeinheit 22 umfasst des Weiteren eine Datenbank 24, in der für jede Anlagenkomponente ein Planungsobjekt 25,25',25" hinterlegt ist. Analog zu der für die Bedienobjekte 6, 6' und 6" gewählten Nomenklatur entsprechen das Planungsobjekt 25' dem als "KRE-U050" bezeichneten Ventil, die Planungsobjekte 25 den weiteren im Bedienbild 3 dargestellten Anlagenkomponenten und die Planungsobjekte 25" den übrigen, nicht im Bedienbild 3 dargestellten Anlagenkomponenten.

Bei den Planungsobjekten 25,25',25" handelt es sich jeweils um ein Datenobjekt, das die Art und ggf. den Typ der zugeordneten Anlagenkomponente spezifiziert sowie die Anschlussstellen definiert, über die die Anlagenkomponente mit anderen Anlagenkomponenten verbunden ist. Die Anschlussstellen sind hierbei in jedem Planungsobjekt 25,25',25" gegliedert in
- rohrleitungstechnische Anschlussstellen, also Rohranschlüsse zum Anschluss an eine Prozessrohrleitung,
- elektrische Anschlussstellen zum Anschluss an eine elektrische Versorgungsleitung,
- fluidtechnische Anschlussstellen zum Anschluss an eine hydraulische und/oder pneumatische Versorgungsleitung sowie
- logische Anschlussstellen zum Anschluss an Signal- und Steuerleitungen.

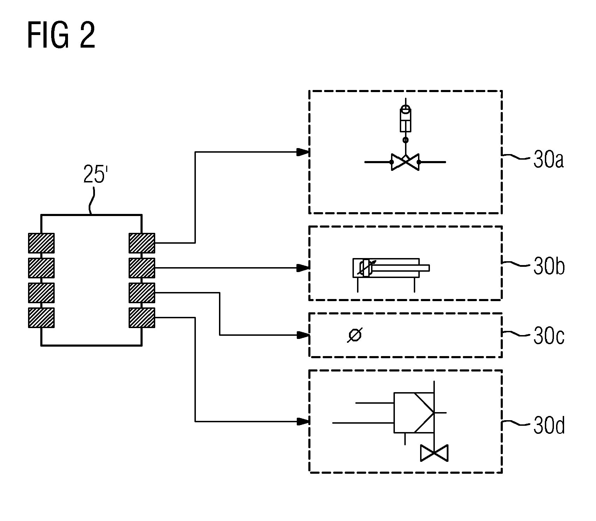

So definiert das in FIG 2 schematisch näher dargestellte Planungsobjekt 25' das Ventil "KRE-U050" als pneumatisch betätigbares Ventil und definiert als zugehörige Anschlussstellen
- zwei Rohranschlüsse mit bestimmtem Durchmesser,
- zwei fluidtechnische Anschlussstellen zum Anschluss an eine pneumatische Versorgungsleitung, und
- drei logische Anschlussstellen, von denen zwei Anschlussstellen Signaleingänge zum Anschluss von Steuerleitungen sind, während es sich bei der dritten Anschlussstelle um einen Signalausgang zur Ausgabe eines Druckmesswertes handelt.

Da es sich bei dem Ventil "KRE-U050" um ein pneumatisch betätigbares Ventil handelt, ist bei dem Planungsobjekt 25' der Definitionsbereich für elektrische Anschlussstellen leer. Es wird also durch das Planungsobjekt 25' keine elektrische Anschlussstelle definiert.

Jedes Planungsobjekt 25,25',25" umfasst zusätzlich eine Identifikationsangabe, die den die zugehörige Anlagenkomponente eindeutig identifizierenden Namen enthält. So ist dem Planungsobjekt 25' entsprechend wiederum der Name "KRE-U050" zugewiesen.

Im Rahmen eines von dem Diagnoseprogramm 23 automatisch durchgeführten Diagnoseverfahrens erzeugt das Diagnoseprogramm 23 nach dem Programmstart zunächst auf dem Bildschirm 21 ein Auswahlmenü 26, über das der Nutzer eines oder mehrere Planungsobjekte 25,25',25" auswählen kann. Wie aus FIG 1 ersichtlich, erzeugt das Diagnoseprogramm 23 das Auswahlmenü 26 beispielsweise in Form "Menübaums", in dem alle verfügbaren Planungsobjekte 25,25',25" aufgelistet sind. Der Nutzer nimmt die Auswahl insbesondere dadurch vor, dass er mit einem Zeigergerät (z.B. einer Computermaus) das gewünschte Planungsobjekt, gemäß FIG 1 beispielhaft das Planungsobjekt 25', markiert ("anklickt") und - wie in FIG 1 durch einen Pfeil 27 angedeutet - per Drag&Drop-Technik auf einen definierten Arbeitsplatzbereich 28 der Oberfläche des Bildschirms 21 zieht. Alternativ hierzu kann der Nutzer die Auswahl treffen, indem er den Namen des gewünschten Planungsobjekts 25', hier "KRE-U050", mittels einer als Eingabemittel an die Diagnoseeinheit 22 angeschlossenen Tastatur 29 eingibt.

Auf die durch den Nutzer getroffene Auswahl hin erzeugt das Diagnoseprogramm 23 auf dem Arbeitsplatzbereich 28 des Bildschirms 21 eine grafische Darstellung des ausgewählten Planungsobjekts 25'. Das Diagnoseprogramm 23 erzeugt diese Darstellung hierbei nach Maßgabe einer durch den Nutzer vorgebbaren Einstellung in einer von vier verschiedenen (An-) Sichten 30a-30d (FIG 2), die die rohrleitungstechnischen, elektrischen, fluidtechnischen bzw. logischen Anschlussstellen des Planungsobjekts 25' visualisieren. Das Diagnoseprogramm 23 greift für die Ansichten 30a-30d nach Maßgabe der in dem ausgewählten Planungsobjekt 25' enthaltenen Angaben auf entsprechenden Vorlagen 31 zurück, die in der Datenbank 24 hinterlegt sind.

Die anzuzeigende Ansicht 30a-30d kann der Nutzer über ein zweites Auswahlmenü 32, das durch das Diagnoseprogramm 23 auf dem Bildschirm 21 erzeugt wird, wählen und reversibel ändern. Das Auswahlmenü 32 umfasst hierzu vier, den zur Verfügung stehenden Ansichten entsprechende Auswahlfelder, umfassend ein Auswahlfeld "Rohrleitungssicht" 32a, ein Auswahlfeld "Elektrische Sicht" 32b, ein Auswahlfeld "Pneumatische Sicht" 32c, sowie ein Auswahlfeld "Logische Sicht" 32d. In dem Beispiel gemäß FIG 1 wird das Planungsobjekt 25' gemäß dem schraffiert dargestellten Auswahlfeld "Rohrleitungssicht" 32a in der rohrleitungstechnischen Ansicht 30a dargestellt. Die für das Planungsobjekt 25' verfügbaren Ansichten 30a-30d sind in FIG 2 einander gegenübergestellt. Da das durch das Planungsobjekt 25' repräsentierte Ventil keine elektrischen Anschlussstellen hat, ist die elektrische Ansicht 30c hier leer.

In einem weiteren Verfahrensschritt ermittelt das Diagnoseprogramm 23 dasjenige Bedienobjekt 6', das derselben Anlagenkomponente (hier also dem Ventil "KRE-U050") zugeordnet ist wie das ausgewählte Planungsobjekt 25'. Für diese Zuordnung greift das Diagnoseprogramm 23 auf eine in der Datenbank 24 hinterlegte Zuordnungstabelle 33 zurück, in der jedes Bedienobjekt 6,6',6" mit dem zugehörigen Planungsobjekt 25,25',25" logisch verknüpft ist. In einer alternativen Verfahrensvariante ist abweichend hiervon vorgesehen, dass das Diagnoseprogramm 23 unter Rückgriff auf die Steuereinheit 4 die dortige Datenbank 8 nach einem Bedienobjekt 6,6',6" durchsucht, das namensgleich zu dem ausgewählten Planungsobjekt 25,25',25" ist.

Dabei ist allerdings zu berücksichtigen, dass die Zuordnung eines Bedienobjekts 6,6',6" nicht zu jedem Planungsobjekt 25,25',25" möglich ist, zumal die Datenbank 8 nur Bedienobjekte 6,6',6" zu solchen Anlagenkomponenten enthält, die auch bedien- und/oder beobachtbar sind.

Sofern das zugehörige Bedienobjekt 6' ermittelt werden kann, erzeugt das Diagnoseprogramm 23 unter Interaktion mit dem Generator 7 der Steuereinheit 4 die zugehörige Darstellung 5', vorzugsweise in vereinfachter, auf die Tabelle 9 beschränkter Form, und zeigt diese auf dem Arbeitsplatzbereich 28 des Bildschirms 21 an. Vorzugsweise erzeugt das Diagnoseprogramm 23 dabei eine grafische Verknüpfung zwischen der Ansicht 30a-30d des ausgewählten Planungsobjekts 25' und der Darstellung 5' des zugehörigen Bedienobjekts 6', insbesondere in Form einer diese Ansicht 30a-30d in der Darstellung 5' verbindenden Linie. Die Istgrößen der auf dem Arbeitsplatzbereich 28 dargestellten Bedienobjekte 6,6',6" werden von dem Generator 7 in gleicher Weise aktualisiert wie bei den in dem Bedienbild 3 dargestellten Bedienobjekten 6,6'. Optional kann darüber hinaus vorgesehen sein, dass der Nutzer über die Diagnosevorrichtung 20 die Soll- und Stellgrößen der auf dem Arbeitsplatzbereich 28 dargestellten Bedienobjekte 6,6',6" in gleicher Weise und mit gleicher Wirkung verändern kann wie an dem Leitstand 1.

Der Nutzer kann auf die vorstehend beschriebene Weise mehrere Planungsobjekte 25,25',25" auswählen und - ggf. jeweils zusammen mit dem zugehörigen Bedienobjekt 6,6',6" - auf dem Arbeitsplatzbereich 28 darstellen lassen.

Neben der isolierten, d.h. voneinander getrennten Darstellung der Planungsobjekte 25,25',25" bietet das Diagnoseverfahren drei Funktionen, die es ermöglichen, mehrere Planungsobjekte 25,25',25" in ihrer Beziehung zueinander darzustellen, nämlich eine sogenannte "Kontextdarstellung", eine sogenannte "Verbindungsdarstellung" und eine sogenannte "Versorgungsdarstellung". Diese Darstellungen kann der Nutzer durch Betätigung ("Anklicken") entsprechender Schaltflächen 34a-34c (Buttons) mit den Beschriftungen "Kontext", "Verbindung" bzw. "Versorgung" auf der Oberfläche des Bildschirms 21 veranlassen.

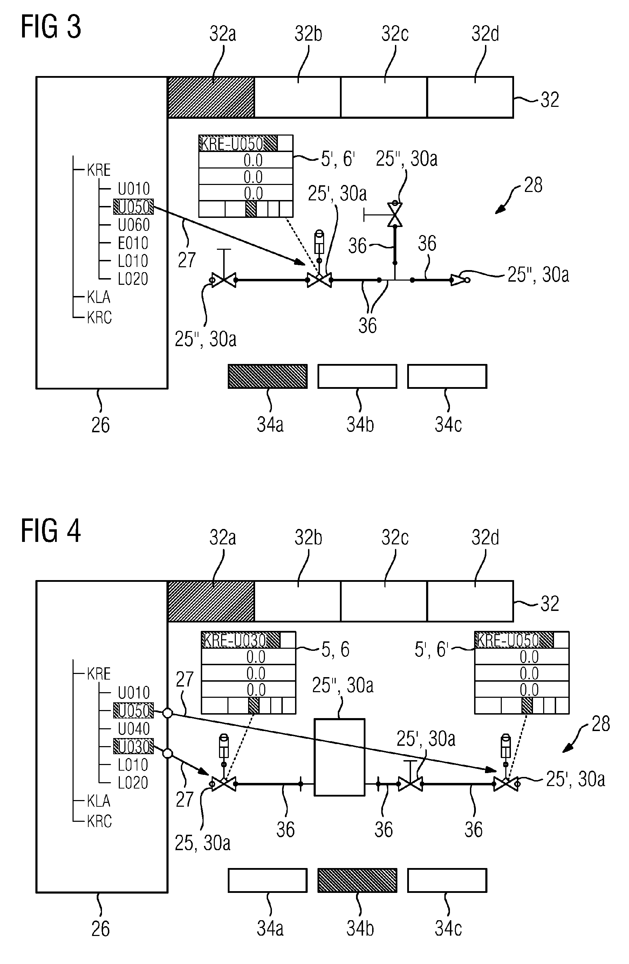

Für die Kontextdarstellung markiert der Nutzer gemäß FIG 3 zunächst mindestens ein auf dem Arbeitsplatzbereich 28 dargestelltes Planungsobjekt 25,25',25" (im Beispiel das Planungsobjekt 25') und betätigt anschließend die Schaltfläche 34a. Das Diagnoseprogramm 23 ermittelt hierauf die Planungsobjekte 25, 25" der "benachbarten" Anlagenkomponenten, die mit der Anlagenkomponente des markierten Planungsobjekts 25' unmittelbar über eine Verbindungsleitung verbunden sind. Das Diagnoseprogramm 23 greift hierzu auf eine Verbindungstabelle 35 (FIG 1) zu, die in der Datenbank 24 hinterlegt ist, und in der die miteinander verbundenen Anschlussstellen der Planungsobjekte 25,25',25" einander zugeordnet sind.

Je nach der eingestellten Ansicht 30a-30d berücksichtigt das Diagnoseprogramm hierbei nur rohrleitungstechnische, elektrische, fluidtechnische oder logische Verbindungsleitungen. Im dem Beispiel gemäß FIG 3 ist über das Auswahlfeld "Rohrleitungssicht" 32a, sowie die Schaltfläche "Kontext" 34a der rohrleitungstechnische Kontext des Ventils "KRE-U050" dargestellt. Bei den diesbezüglich zu dem Planungsobjekt 25' benachbarten Planungsobjekten 25" handelt es sich um Planungsobjekte 25" zu zwei Handventilen "KRE-U060" und "KRE-U040" sowie um ein Planungsobjekt 25" zu einem Reduzierstück "KRE.Z001".

Die benachbarten Planungsobjekte 25" werden von dem Diagnoseprogramm 23 in der ausgewählten Ansicht 30a-30d, (im Beispiel der rohrleitungstechnischen Ansicht 30a) auf dem Arbeitsplatzbereich 28 dargestellt. Zusätzlich erzeugt das Diagnoseprogramm 23 Darstellungen 36 der diese Planungsobjekte 25',25" verbindenden Verbindungsleitungen und fügt diese ebenfalls in den Arbeitsplatzbereich 28 ein.

Sofern mit den benachbarten Planungsobjekten 25" Bedienobjekte korrespondieren, werden diese Bedienobjekte von dem Diagnoseprogramm 23 ermittelt und auf dem Arbeitsplatzbereich 28 dargestellt. In dem Beispiel gemäß FIG 3 sind allerdings weder die Handventile "KRE-U060" und "KRE-U040" noch das Reduzierstück "KRE.Z001" bedien- oder beobachtbar, so dass zu diesen Anlagekomponenten auch keine Bedienobjekte existieren. Für die Verbindungsdarstellung markiert der Nutzer gemäß FIG 4 zunächst mindestens zwei auf dem Arbeitsplatzbereich 28 dargestellte Planungsobjekte 25,25',25" (im Beispiel das Planungsobjekt 25' des Ventils "KRE-U050" und ein weiteres Planungsobjekt 25 zu einem ebenfalls pneumatisch betätigbaren Ventil "KRE-U030"). Der Nutzer betätigt anschließend die Schaltfläche "Verbindung" 34b. Das Diagnoseprogramm 23 ermittelt hierauf die Planungsobjekte 25,25" derjenigen Anlagenkomponenten, die mit einer ihrer Anschlussstellen unmittelbar oder mittelbar über eine Verbindungsleitung mit der Anlagenkomponente des einen markierten Planungsobjekts 25 verbunden sind, und die mit einer weiteren Anschlussstelle unmittelbar oder mittelbar über die Verbindungsleitung mit der Anlagenkomponente des weiteren markierten Planungsobjekts 25' verbunden sind. Mit anderen Worten ermittelt das Diagnoseprogramm 23 die Planungsobjekte 25,25" aller Anlagenkomponenten, die entlang einer Verbindungsleitung zwischen den Anlagenkomponenten der markierten Planungsobjekte 25 und 25' liegen. Das Diagnoseprogramm 23 berücksichtigt hierbei wiederum nur die Verbindungsleitungen, die der eingestellten Ansicht 30a-30d entsprechen. In dem Beispiel gemäß FIG 4, in dem wiederum die rohrleitungstechnische Ansicht 30a eingestellt ist, ermittelt das Diagnoseprogramm 23 somit nur die Planungsobjekte 25" derjenigen Anlagenkomponenten, die entlang einer Rohrleitung den Ventilen "KRE-U050" und "KRE-U030" zwischengeschaltet sind.

Die zwischen den markierten Planungsobjekten 25 und 25' liegenden Planungsobjekte 25" werden von dem Diagnoseprogramm 23 in der ausgewählten Ansicht 30a-30d (hier der rohrleitungstechnischen Ansicht 30a) auf dem Arbeitsplatzbereich 28 dargestellt. Zusätzlich zeigt das Diagnoseprogramm 23 wiederum Darstellungen 36 der diese Planungsobjekte 25,25',25" verbindenden Verbindungsleitungen in dem Arbeitsplatzbereich 28 an.

Sofern mit den dargestellten Planungsobjekten 25" Bedienobjekte korrespondieren, werden diese Bedienobjekte wiederum von dem Diagnoseprogramm 23 ermittelt und auf dem Arbeitsplatzbereich 28 dargestellt.

Bei der Versorgungsdarstellung handelt es sich um eine Variante der Kontextdarstellung, bei der das Diagnoseprogramm 23 alle Planungsobjekte ermittelt und darstellt, deren Anlagekomponenten an dieselbe Versorgungsleitung angeschlossen sind wie die Anlagenkomponente eines markierten Planungsobjekts. Je nach eingestellter Ansicht 30a-30d werden hierbei wiederum nur rohrleitungstechnische, elektrische, fluidtechnische oder logische Versorgungsleitungen berücksichtigt.

Mittels des vorstehend beschriebenen Verfahrens kann der Nutzer somit in einem gegebenen Fehlerfall der Anlage auf dem Arbeitsplatzbereich 28 des Bildschirms 21 ein nutzerspezifisches und auf den jeweiligen Fehlerfall zurechtgeschnittenes Diagnosebild der Anlage erzeugen, das die für die Fehlerdiagnose relevante Bedien- und Planungsinformation gebündelt und separiert von weiterer, für die Fehlerdiagnose irrelevanter Information enthält.

Die Diagnosevorrichtung 20 kann dem Leitstand 1 unmittelbar beigeordnet sein. Insbesondere kann die Diagnosevorrichtung 20 hardware- und/oder softwaretechnisch in den Leitstand 1 integriert sein. Desweiteren kann der Bildschirm 2 auch als Anzeigegerät der Diagnosevorrichtung 20 mitbenutzt werden, wobei der Diagnosevorrichtung 20 in diesem Fall vorzugsweise ein Fenster oder ein in anderer Weise von dem Bedienbild 3 separierter Arbeitsbereich auf dem Bildschirm 2 zugeordnet wird. Die Diagnosevorrichtung 20 kann aber auch räumlich entfernt von dem Leitstand 1 angeordnet sein. Sie kann des Weiteren auch unabhängig von dem Leitstand 1 implementiert sein, wobei in diesem Fall die Datenbank 8 und die Funktionalität des Generators 7 in die Diagnosevorrichtung 20 zu integrieren ist.

Die geschützte Erfindung ist nicht auf die vorstehend beschriebenen Ausführungsbeispiele beschränkt. Vielmehr können weitere Ausführungsformen der Erfindung von dem Fachmann gefunden werden.

## Patentansprüche

1. Verfahren zur Unterstützung der Fehlerdiagnose einer Industrieanlage,
- bei dem eine Anzahl von Bedienobjekten (6,6',6") zur Auswahl angezeigt werden, wobei das oder jedes Bedienobjekt (6,6',6") ein signaltechnisch mit einer Anlagenkomponente der Industrieanlage verbundenes Datenobjekt ist, das ein Set von Istgrößen, Sollgrößen und/oder Stellgrößen der zugeordneten Anlagenkomponente beinhaltet,
- bei dem bei Auswahl des Bedienobjekts (6,6',6") bzw. eines der Bedienobjekte (6,6',6") ein derselben Anlagenkomponente zugeordnetes Planungsobjekt (25,25',25") ermittelt wird, wobei das oder jedes Planungsobjekt (25,25',25") ein Datenobjekt ist, das die Art der Anlagenkomponente charakterisiert sowie die Anschlussstellen, über die die Anlagenkomponente mit anderen Anlagenkomponenten wechselwirkt, und
- bei dem das ausgewählte Bedienobjekt (6,6',6") zusammen mit dem zugeordneten Planungsobjekt (25,25',25") auf einem Anzeigegerät (21) dargestellt werden.

2. Verfahren zur Unterstützung der Fehlerdiagnose einer Industrieanlage,
- bei dem eine Anzahl von Planungsobjekten (25,25',25") zur Auswahl angezeigt werden, wobei das oder jedes Planungsobjekt (25,25',25") ein Datenobjekt ist, das die Art einer zugeordneten Anlagenkomponente der Industrieanlage charakterisiert sowie die Anschlussstellen, über die die Anlagenkomponente mit anderen Anlagenkomponenten wechselwirkt,
- bei dem bei Auswahl des Planungsobjekts (25,25',25") bzw. eines der Planungsobjekte (25,25',25") ein derselben Anlagenkomponente zugeordnetes Bedienobjekt (6,6',6") ermittelt wird, wobei das oder jedes Bedienobjekt (6,6',6") ein signaltechnisch mit der zugeordneten Anlagenkomponente verbundenes Datenobjekt ist, das ein Set von Istgrößen, Sollgrößen und/oder Stellgrößen der Anlagenkomponente beinhaltet, und
- bei dem das ausgewählte Planungsobjekt (25,25',25") zusammen mit dem zugeordneten Bedienobjekt (6,6',6") auf einem Anzeigegerät (21) dargestellt werden.

3. Verfahren nach Anspruch 1 oder 2,
bei dem das angezeigte Planungsobjekt (25,25',25") und das zugehörige angezeigte Bedienobjekt (6,6',6") grafisch miteinander verknüpft werden.

4. Verfahren nach einem der Ansprüche 1 bis 3,
bei dem das Planungsobjekt (25,25',25")
- in einer Rohrleitungsansicht (30a) in Form einer RI-Darstellung,
- in einer elektrischen Ansicht (30b) in Form eines elektrischen Schaltzeichens,
- in einer pneumatischen bzw. hydraulischen Ansicht (30c) in Form eines fluidtechnischen Schaltzeichens und/oder
- in einer logischen Ansicht (30d) in Form eines logischen Schaltzeichens
auf dem Anzeigegerät (21) dargestellt wird.

5. Verfahren nach einem der Ansprüche 1 bis 4,
- bei dem für das angezeigte oder anzuzeigende Planungsobjekt (25,25',25") eine Auswahl von mehreren Ansichten (30a-30d) bereitgestellt wird, und
- bei dem das Planungsobjekt (25,25',25") gemäß der ausgewählten Ansicht (30a-30d) auf dem Anzeigegerät (21) dargestellt wird.

6. Verfahren nach einem der Ansprüche 1 bis 5,
- bei dem mindestens ein Planungsobjekt (25,25',25") zur mittelbaren oder unmittelbaren Auswahl bereitgestellt wird,
- bei dem das oder jedes weitere Planungsobjekt (25,25',25") ermittelt wird, welches unmittelbar mit einer Anschlussstelle des ausgewählten Planungsobjekts (25,25',25") verbunden ist, und
- bei dem in einer Kontextdarstellung das ausgewählte Planungsobjekt (25,25',25") zusammen mit dem oder jedem damit verbundenen Planungsobjekt (25,25',25") auf dem Anzeigegerät (21) dargestellt wird.

7. Verfahren nach einem der Ansprüche 1 bis 6,
- bei dem mindestens zwei Planungsobjekte (25,25',25") zur mittelbaren oder unmittelbaren Auswahl bereitgestellt werden,
- bei dem alle weiteren Planungsobjekte (25,25',25") ermittelt werden, welche über eine Anschlussstelle mittelbar oder unmittelbar mit einem der ausgewählten Planungsobjekte (25,25',25") verbunden ist, und welche über eine andere Anschlussstelle mittelbar oder unmittelbar mit einem anderen ausgewählten Planungsobjekt (25,25',25") verbunden ist, und
- bei dem in einer Verbindungsdarstellung die ausgewählten Planungsobjekte (25,25',25") zusammen mit den ermittelten weiteren Planungsobjekten (25,25',25") auf dem Anzeigegerät (21) dargestellt werden.

8. Verfahren nach einem der Ansprüche 1 bis 7,
- bei dem ein Planungsobjekt (25,25',25") zur mittelbaren oder unmittelbaren Auswahl bereitgestellt wird,
- bei dem eine Versorgungsleitung ermittelt wird, mit welcher das ausgewählte Planungsobjekt (25,25',25") verbunden ist, und
- bei dem in einer Versorgungsdarstellung das ausgewählte Planungsobjekt (25,25',25") zusammen mit der Versorgungsleitung auf dem Anzeigegerät (21) dargestellt wird.

9. Verfahren nach Anspruch 8,
- bei dem alle weiteren Planungsobjekte (25,25',25") ermittelt werden, die mit derselben Versorgungsleitung verbunden sind wie das ausgewählte Planungsobjekt (25,25',25"), und
- bei dem das ausgewählte Planungsobjekt (25,25',25") mit den ermittelten weiteren Planungsobjekten (25,25',25") auf dem Anzeigegerät (21) dargestellt wird.

10. Vorrichtung (20) zur Unterstützung der Fehlerdiagnose einer Industrieanlage, mit einer Diagnoseeinheit (22), welche dazu eingerichtet ist, das Verfahren nach einem der Ansprüche 1 bis 9 durchzuführen, sowie mit einem Anzeigegerät (21) zur Darstellung des Planungsobjekts (25,25',25") oder der Planungsobjekte (25,25',25") sowie zur Darstellung des oder jeden zugeordneten Bedienobjekts (6, 6', 6").
